# EUROPEAN PATENT APPLICATION

(11) **EP 2 518 375 A1**
(43) Date of publication of application: **31.10.2012**
(21) Application number: 09852473.9
(22) Date of filing: 24.12.2009
(51) Int. Cl.: F16K 1/38, F16K 1/44, F16K 1/46

(54) **SELF-LUBRICATED PLUG VALVE HAVING A QUICK-CHANGE JACKET**

(71) Applicant: Arflu S.A., 28108 Alcobendas - Madrid (ES)
(72) Inventor: VEGA VILLA, Javier, 28108 Alcobendas - Madrid (ES)
(74) Representative: Jimenez Duch, Rocio
(86) International application number: PCT/ES2009/000596
(87) International publication number: WO 2011/076953

(57) **Abstract**

The invention relates to a self-lubricated plug valve having a quick-change jacket, having a tapered shutter (2) and jacket (3) in one body (4) and an upper lid (5), connected by studs (6) and nuts (7), in which the jacket (3) is inserted in a removable jacket mounting (10), the configuration of which is adjusted in order to adapt to the inside of the body (4), allowing the entire mounting unit (10), jacket (3) and shutter (2) to be replaced in order to replace the jacket (3). The removable jacket mounting (10) has side windows aligned with the through hole of the jacket (3) in which a set of additional mounting seals (11) have been provived to guarantee the seal thereof. The removable jacket mounting (10) is attached to the body (4) by means of Allen® screws (12).

## Description

### OBJECT OF THE INVENTION

The invention, such as claimed in the statement of the present project narrative, relates to a self-lubricated plug valve having a quick-change jacket, offering several novelty advantages and characteristics, which shall be described in detail further on, that assume a noticeable improvement compared to the devices currently known in the state of the technology to the same purpose.

More in particular, the object of the invention centers on a valve, of a self-lubricated plug type, having the particularity that it has an innovative structural configuration thanks to which, if necessary, it allows an easy and quick jacket change, thus improving the safety of workers during the maintenance tasks, especially when said valves are installed in places with a difficult access, and achieving an important reduction in terms of time and economic cost in said operations to replace the jacket since to that purpose it is not necessary to perform the insertion on site.

### FIELD OF APPLICATION OF THE INVENTION

The field of application of the present invention lies within the technical sector of the industry dedicated to the manufacturing of valves, particularly the self-lubricated plug valves.

### BACKGROUND OF THE INVENTION

As is known, a self-lubricated plug valve is a type of valve designed to shut off or control the flow of a fluid through a pipeline, by the rotation of up to 90 ° of a tapered shutter that sits on a piece of plastic material, being known as self-lubricated because said piece on which the shutter sits, since it is of plastic material, it does not require the addition of grease from the outside in order to guarantee the shutting off of the valve.

This piece of plastic material is known as jacket and, in the event that it gets damaged during the life of the valve, its replacement becomes necessary.

On the other hand, it is necessary to take into account that one of the most typical constructions of plug valves is the one known with butts to weld BW (acronym for BUTT WELDING), in which the valve is welded by its ends to the pipeline in order to completely prevent leakages to the exterior and, therefore, it cannot be removed from the line without cutting it, with the further costs implied.

In such a case, the replacement of the jacket shall be performed, therefore, on site, in other words, without removing the valve from the line. The problem specifically arises because the valve may be located in any position, even some meters high or in pits where access becomes difficult.

Moreover, in order to mount the new jacket on the valve it is necessary to insert the jacket in the body of the valve using mechanical or hydraulic screw systems that are capable of providing several tons of force. Said systems are heavy and difficult to handle, besides having a high cost.

More specifically, the jacket is a tapered piece of a soft plastic material, typically PTFE (Poly Tetra Fluoro Ethylene), and in rough condition, it must expand upon mounting the valve for it to adopt the shape of the body and to seal the flow of fluid between the jacket and the shutter or plug.

This expansion of the jacket is performed through insertion in the body of the valve using a series of tools in the shape of a cone that, as they go down, they expand the jacket causing pressure against the internal walls of the body.

In order to achieve this effect, those tools are pushed through mechanical or hydraulic screw systems that exercise forces of several tons.

Therefore, these are bulky tools, with dimensions that exceed that of the valve shutter, with a heavy weight and that need an approximate space of double the total height of the valve for its use.

The objective of the present invention is, therefore, the development of a new valve that avoids said inconveniences and has such a structure that allows replacing the jacket in a quick manner, using only conventional tools, being necessary to state that on behalf of the requestor there is no knowledge of the existence of any other valve presenting its same technical, structural and constitutive characteristics or other similar.

### EXPLANATION OF THE INVENTION

Thus, the self-lubricated plug valve having a quick-change jacket proposed by the present invention, is configured as a significant novelty within its field of application since, in accordance with its implementation and exhaustively, the objectives previously indicated as suitable are satisfactorily reached, being the characterized details that make this possible and distinguish it of the already known in the market adequately set down in the final claims that are enclosed to this project narrative.

In particular, the idea that the invention proclaims is a self-lubricated plug valve that is a shut-off valve by rotation of a quarter turn of a shutter or plug introduced tightly inside a jacket, in other words, with a structure and operation similar to that of a conventional self-lubricated plug valve, having the particularity that, in it, the closing of pressure occurs through the adjustment of the shutter, the jacket and a jacket mounting as an additional piece, in which the jacket is inserted and that can be easily removed by means of Allen® screws.

In this way, in order to perform the maintenance and replacement of the jacket, it is not necessary to insert on the valve in the line of pipes itself, since it is possible to replace all the jacket mounting set and jacket damaged by a previous insertion in factory or in workshop. In this way, it is possible to greatly reduce the difficulty of the maintenance operation and, therefore, the time allocated to it, increase the safety of workers who shall be performing the replacement, since they shall not need to work with heavy hydraulic systems, and also reduce the cost of labour of the replacement.

The described self-lubricated plug valve having a quick-change jacket therefore represents an innovative structure of structural and constitutive characteristics unknown up to now for said purpose, reasons that, together with its practical use, give it the sufficient grounds to obtain the privilege of exclusiveness being requested.

### DESCRIPTION OF THE DRAWINGS

To complement the description being made and in order to aid towards a better understanding of the characteristics of the invention, a set of plans is attached to the present project narrative, as an integral part thereof, where with illustrative and non-limiting character, the following has been represented:
Figure number 1. - Shows an exploded view of the self-lubricated plug valve having a quick-change jacket subject matter of the invention, where it is possible to observe the main parts and elements it comprises, as well as the configuration and layout of each of them.
Figure number 2. - Shows a sectional view, according to a vertical cut, of the valve as per the invention once mounted.

### PREFERRED EMBODIMENT OF THE INVENTION

In light of the figures mentioned, and in accordance with the numbering adopted, it is possible to observe in them an example of preferred embodiment of the invention, which comprises the parts and elements indicated and described in detail below.

Thus, as it can be observed in said figures, the valve (1) in question is furnished in a conventional manner with a tapered shutter (2), also known as plug, inserted tightly in a jacket (3) provided inside a pressure vessel that attaches to the pipeline and is configured as from a body (4) and an upper lid (5), connected by studs (6) and nuts (7), and sealed with different joints (8), also having a lower lid (9) to enable its removal, which lower lid (9), depending on the sizes of valves, may not exist.

Likewise, in a conventional manner, said shutter (2) and said jacket (3) present respective through holes and the closing occurs by means of the 90 ° rotation of the shutter (2) inside the jacket (3) in such a way that the hole of the shutter remains perpendicular to the hole of the jacket.

So then, the mentioned jacket (3) and already in a characterized manner, is inserted in a removable jacket mounting (10), the configuration of which is adjusted in order to adapt to the inside of the body (4) of the valve, having the respective side windows aligned with the through hole of the jacket (3) and in which a set of additional mounting seals (11) have been provided in order to guarantee the seal thereof.

In a preferred embodiment of the invention, said removable jacket mounting (10) is secured to the case of the valve (1), specifically to the body (4) by means of Allen® screws (12), without disregarding other fixing solutions, allowing the change of the complete jacket mounting set (10), the jacket (3) and the shutter (2), in order to proceed to the replacement of the jacket (3), preventing the fact of having to remove completely the valve (1) or insert the jacket (3) on site.

To the purpose of screwing, the mounting (10) has, for example, an upper peripheral rim (10a) with a hole that attaches on a gradation (4a) provided for in the internal wall of the body (4), that has holes in alignment with those of the mentioned mounting rim.

The valve (1), besides, also in a conventional manner, has a regulating system that allows the adjustment of the shutter (2) pushing it downwards by means of some stud bolts (13) that push a pressure ring (14).

The shutter (2) is mounted on the body (4) and the upper lid (5) by means of several bushes (15) that guarantee its position and restrict its radial displacement under the effect of pressure. Depending on the size of the valve, these bearings may not exist.

The activation of the shutter (2) is performed attaching an actuator to the upper mounting (16) provided in its top part, and which actuator can be of any type, manual hand lever or gear actuator, pneumatic or electric. The actuator activates the coupling (17) of the upper mounting (16) which, in turn, moves the shutter (2).

Thus, while in a conventional valve the closing of it is performed through the adjustment between the shutter (2), the jacket (3) and the body (4), in the valve (1) proclaimed, said closing of pressure is carried out through the adjustment of the shutter (2), the jacket (3) and the removable jacket mounting (10) screwed to the body (4).

Having sufficiently described the nature of the present invention, as well as the way of putting it into practice, it is not considered necessary to give greater explanation so that any person skilled in the art can understand its scope and the advantages derived from it, placing on record that, within its essential nature, it can be put into practice in other forms of embodiment that differ in details from that indicated by way of example, and to which protection claimed shall also be given, provided that its main principle is not altered, changed or modified.

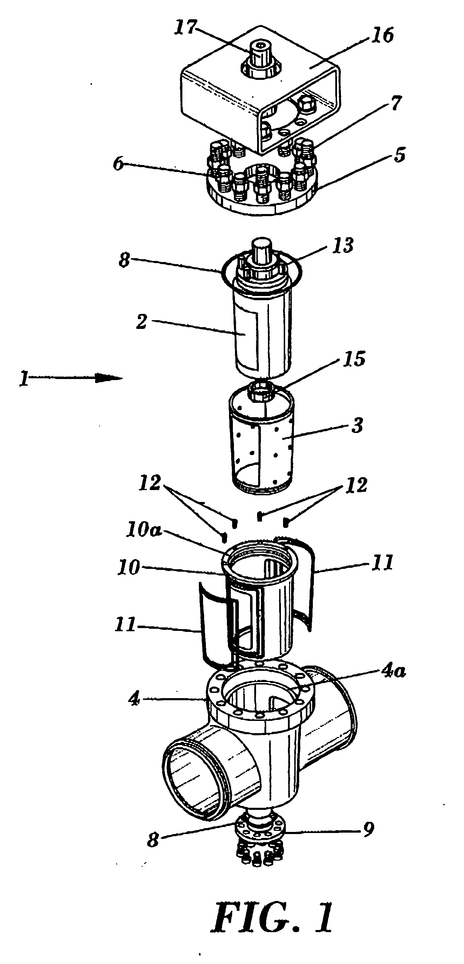

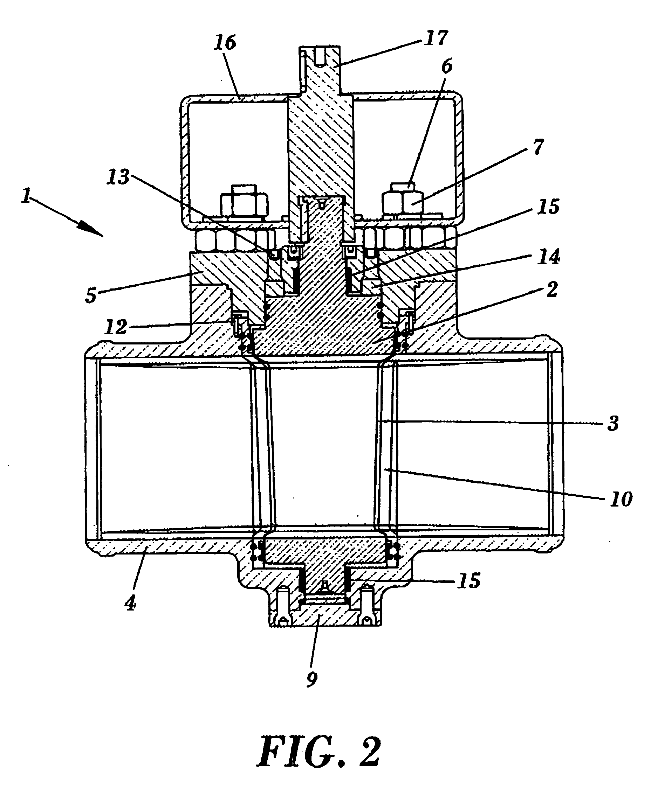

## Claims

1. SELF-LUBRICATED PLUG VALVE HAVING A QUICK-CHANGE JACKET, of the type that has a tapered shutter (2) and a jacket (3) provided inside a pressure vessel configured as from a body (4) and an upper lid (5), connected by means of studs (6) and nuts (7), and sealed with several seals (8), having optionally a lower lid (9) in order to enable its removal, in which shutter (2) and said jacket (3) present respective through holes and the closing occurs by means of the 90 ° rotation of the shutter (2) inside the jacket (3), **characterized by** the fact that the jacket (3) is inserted in a removable jacket mounting (10), the configuration of which is adjusted in order to adapt to the inside of the body (4), allowing the change of the complete jacket mounting set (10), the jacket (3) and the shutter (2), so as to proceed to the replacement of the jacket (3).

2. SELF-LUBRICATED PLUG VALVE HAVING A QUICK-CHANGE JACKET, according to claim 1, **characterized by** the fact that the removable jacket mounting (10) has the respective side windows aligned with the through hole of the jacket (3) and in which a set of additional mounting seals (11) have been provided in order to guarantee the seal thereof.

3. SELF-LUBRICATED PLUG VALVE HAVING A QUICK-CHANGE JACKET, according to claims 1 and 2, **characterized by** the fact that, in a preferred embodiment, the removable jacket mounting (10) is secured to the body (4) by means of Allen® screws (12).

4. SELF-LUBRICATED PLUG VALVE HAVING A QUICK-CHANGE JACKET, according to claim 3, **characterized by** the fact that, to the purpose of screwing the jacket mounting (10) to the body (4), said mounting (10) has, for example, an upper peripheral rim (10a) with a hole that attaches on a gradation (4a) provided for in the internal wall of said body (4), that has holes in alignment with those of the mentioned rim of the jacket mounting (10).
